Europäisches Patentamt

European Patent Office

Office européen des brevets

(11) Publication number: **0 252 733 B1**

# EUROPEAN PATENT SPECIFICATION

(45) Date of publication of patent specification: **27.12.91** (51) Int. Cl.⁵: **B63H 19/02**, B63H 1/36

(21) Application number: **87306034.7**

(22) Date of filing: **08.07.87**

(54) A propulsion system for a water borne vessel.

(30) Priority: **08.07.86 CA 513352**

(43) Date of publication of application:
**13.01.88 Bulletin 88/02**

(45) Publication of the grant of the patent:
**27.12.91 Bulletin 91/52**

(84) Designated Contracting States:
**AT BE CH DE ES FR GB GR IT LI LU NL SE**

(56) References cited:
**FR-A- 1 311 593**
**FR-A- 2 453 774**
**US-A- 2 962 283**

**PATENT ABSTRACTS OF JAPAN, vol. 7, no. 246 (M-253)[1391], 2nd November 1983; & JP-A-58 133 997 (YUTAKA TERAO) 09-08-1983**

(73) Proprietor: **Momot, Adam**
**2-335 West 15th Avenue**
**Vancouver British Columbia, V5Y 1Y3(CA)**

(72) Inventor: **Momot, Adam**
**2-335 West 15th Avenue**
**Vancouver British Columbia, V5Y 1Y3(CA)**

(74) Representative: **Parry, Christopher Stephen et al**
**PAGE, WHITE & FARRER 54 Doughty Street**
**London WC1N 2LS(GB)**

## Description

This invention relates to propulsion systems for water-borne vessels, and especially but not exclusively, to a propulsion system of the kind that can propel the vessel forward by either utilizing wave energy or by causing said vessel to oscillate alternatively in an upward or downward direction from a predetermined horizontal position.

Various attempts have been made to provide a propulsion system for water-borne vessel which can either be used when the vessel is at rest and water pressure from incident waves provide energy to propel the vessel forward or when the vessel is allowed to oscillate alternatively in an upward or downward direction from a predetermined horizontal position thereby permitting said vessel to be propelled forward.

For example, U.S. patent 3,453,981 discloses a water-borne vessel comprising a propulsion system incorporating flexible fin propulsion members. This type of system provides relatively little power or forward motion to a vessel due to the relatively small stroke provided by the flexible fins used in the system. Also, such a vessel cannot be propelled forward when the water is calm and free from waves.

Another propulsion system is disclosed in U.S. patent 3,773,011. However this system cannot utilize the incident wave energy to propel the vessel forward since it requires the alternative upward and downward oscillation of the vessel by a user. This system has the disadvantage of tiring its user fairly quickly and providing little forward motion of the vessel.

JP-A-58-133997 describes a vessel in which wave motion is transmitted to elastic vane supporting bodies to cause flapping motion of a horizontal vane.

The present invention provides a propulsion system for a water borne vessel which can be raised from an operative position to a storage position on the vessel.

Accordingly the invention provides a propulsion system for a water-borne vessel comprising

an elongated inflexible linking member (10) to be attached to the vessel to extend behind the vessel;

a resilient connecting means (12,40) to be attached to the distal end of the elongated, inflexible linking member; and

a generally inflexible fin (13) to be attached to the distal end of the resilient connecting means, the inflexible fin having a flat body, extending outwardly from the distal end of the resilient connecting means to lie generally parallel to the water surface to be able to reciprocate vertically to propel the vessel as the vessel oscillates; characterised in that

the attachment of the elongated inflexible linking member to the vessel is a hinged attachment enabling unfastening of the fin propulsion system to raise it to a storage position on the vessel.

Particular embodiments of the invention will be understood in conjunction with the accompanying drawings in which:

Figures 1 to 2 are illustrations showing the theoretical forces acting on the vessel and the propulsion system from an incident wave;

Figure 3 is an illustration of the theoretical forces acting on the propulsion system when an external force W is applied to the vessel;

Figure 4 is an illustration of the theoretical forces acting on the fin when an external force $F_1$ is applied to the propulsion system;

Figures 5 and 6 are illustrations of the propulsion system for use in conjunction with a sailboat;

Figure 7 is an illustration of the propulsion system using a spring joint;

Figure 8 is a cross section of the spring joint of Figure 7; and

Figure 9 shows a detail of the operation of the fin.

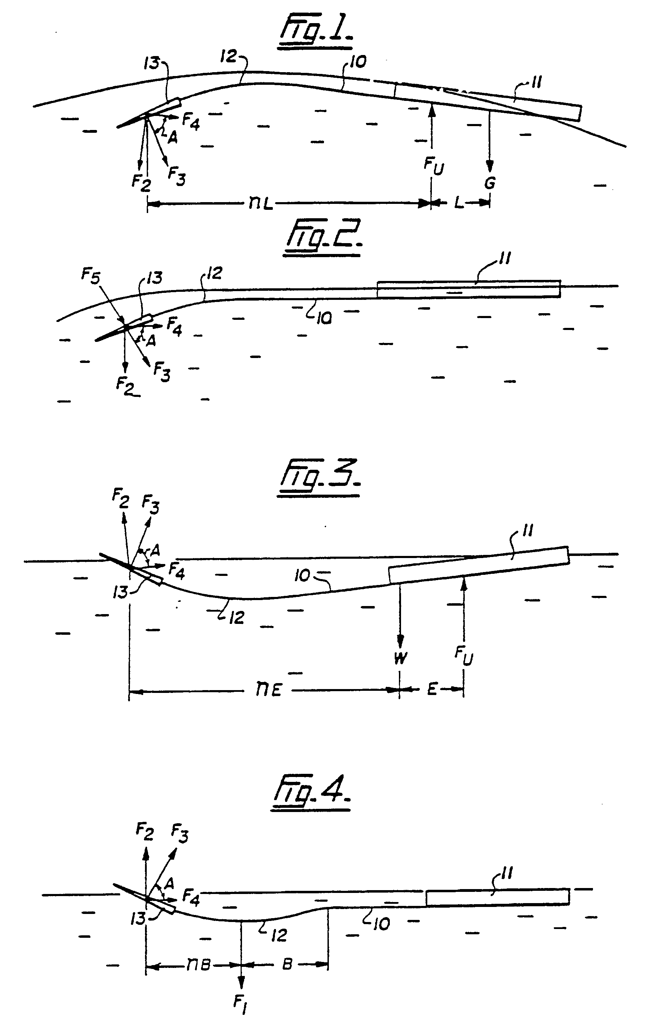

Referring now to Figures 1 and 2 we have shown an illustration of the theoretical forces that can act on a water-borne vessel and the propulsion system disclosed in the present invention. The propulsion system includes an elongated inflexible projection member 10 secured at one end to a vessel 11 and attached at another end to a flexible connecting member 12 which is connected to a generally inflexible fin 13. The uplift force Fu of an incident wave reacts on the propulsion system to create a force $F_3$ having a component $F_4$ parallel to the water line of the vessel and component $F_2$ perpendicular to the water line of the vessel. $F_4$ is the force which will propel the water-borne vessel forward. Assuming that the vessel is provided with a projection of a length nL, $F_4$ can be determined according to the following equation:

$$Fu \times L = F_3(n+1)L$$

wherein Fu is the resultant uplift force on the vessel, L being the distance from the centre of gravity G of the vessel to the centre of uplift force Fu acting on the vessel and n is a positive integer. Accordingly, we have

$$F_3 = \frac{Fu \times L}{L(n+1)} = \frac{Fu}{n+1}$$

$$F_4 = CosA \text{ and } F_3 = \frac{F_4}{CosA}$$
$$\frac{}{F_3}$$

therefore

$$\frac{Fu}{n+1} = \frac{F_4}{CosA}$$

and

$$F_4 = Fu \frac{CosA}{n+1} = \text{Propulsion Force}$$

As can be seen from Figures 1 and 2, an incident wave arriving at the vessel will be such as to create a force Fu on vessel 11 and a reactive force $F_3$ on fin 13. The uplift force Fu on vessel 11 will be quite significant compared to the weight of the vessel and the energy created by the wave will be transmitted from the vessel to fin 13 through inflexible member 10 and flexible member 12. These forces will combine to propel the vessel forward. The uplift force Fu on vessel 11 will of course be much greater than the reactive force $F_3$ on fin 13 and the tremendous energy created by the wave will be transmitted from the vessel to fin 13 upon bending of flexible member 12.

Referring now to Figure 2, force F5 represents the force initiated by an incident wave. As a wave rolls over the water, the crest of the wave creates a downward force F5 thereby forcing the generally inflexible fin 13 to move downwardly with a force F3. The force F3 has a component F4 parallel to the water line of the vessel and component F2 perpendicular to the water line of the vessel Force F4 propels the water-borne vessel forward. The alternate upward and downward motion of the generally inflexible fin is permitted by the bending of the flexible connecting member 12 connected between the generally inflexible fin 13 and the elongated inflexible projection member 10 which is further connected to the stern of vessel 11.

In Figure 2,
$F_5 = F_3$
$F_4 = F_3 \, CosA$

The resiliency of the flexible connecting member will accordingly exert an opposite force as the flexible projection member tends to return to its normal position which lies parallel but below the water line of the vessel.

The generally inflexible fin member 13 can be undergoing minimal deformation. However deformation of the fin can cause a significant loss of propulsion and thus decrease the effectiveness of the propulsion system while moving fast. Thus any deformation $R^\circ$ should be small.

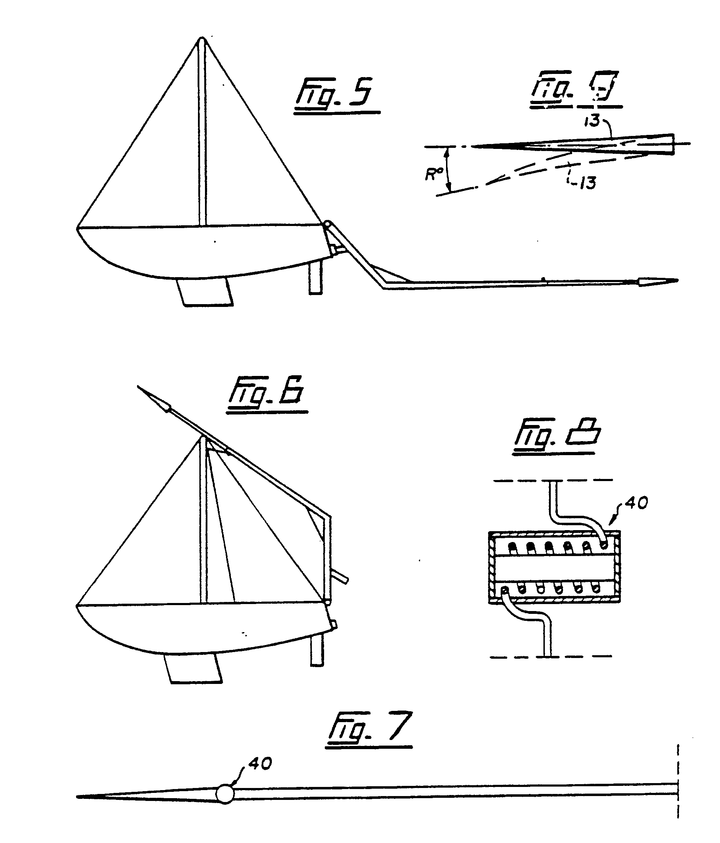

Figure 3 illustrates the effect on the propulsion system of an external force applied to the vessel. If a weight W is applied at the stern of the vessel, the propulsion system will react by moving downwardly. Water pressure on the fin will result in the bending of the flexible projection member as shown in Figure 3. Alternatively, if a weight is applied towards the front end of the vessel, the propulsion system will move upwardly thereby forcing the flexible connecting member to bend in the direction opposite to that shown in Figure 3. This alternate up and down pitching movement will cause a forward motion of the vessel since energy generated by the external force to the vessel will be transferred to the projection member.

In Figure 3:

E is the distance from the centre of uplift force Fu to the centre of weight W exterted on the vessel.

Thus:

$$\frac{F_4}{F_3} = CosA$$

$$W\,E = E(n+1)\ F_3$$

$$\frac{F_4}{CosA} = \frac{W}{n+1}$$

$$F_4 = \frac{W\ CosA}{n+1}$$

In Figure 4 the effect of an external force $F_1$ on the propulsion system is depicted. The vessel can be propelled forward by alternatively exerting an upward and downward external force to the propulsion system at the flexible projection member 12.

In Figure 4 B is the distance from point 31, shown in Figure 6, to which the ropes of the drive means 30 are coupled to the point where rope pulleys 34 and 35 are coupled.

$$\frac{F_4}{F_3} = CosA$$

$$F_1 B = F_3\ (n+1)\ B$$

$$\frac{F_4}{CosA} = \frac{F_1}{n+1}$$

$$F_4 = \frac{F_1\ CosA}{n+1}$$

The propulsion system of the present invention can be secured to an ordinary boat, for example a sail boat as shown in Figures 5 and 6 thereby permitting forward motion of the vessel by utilizing the wave

4

energy, which can be particularly effective in stormy weather and rough seas.

As can be seen from Figures 5 and 6, the attachment to the vessel of the elongated inflexible linking member is a hinged attachment enabling raising of the propulsion system to a storage position on the vessel.

Figure 7 shows another embodiment of the propulsion system in which the flexible projection member 12 is replaced by a spring joint 40 connecting the generally inflexible fin to the inflexible projection member which is hingedly secured to the vessel. Figure 8 depicts a cross-sectional view of the spring joint assembly shown in Figure 7.

Figure 9 shows a detail of the operation of the fin 13.

## Claims

1. A propulsion system for a water-borne vessel comprising

    an elongated inflexible linking member (10) to be attached to the vessel to extend behind the vessel;

    a resilient connecting means (12,40) to be attached to the distal end of the elongated, inflexible linking member; and

    a generally inflexible fin (13) to be attached to the distal end of the resilient connecting means, the inflexible fin having a flat body, extending outwardly from the distal end of the resilient connecting means to lie generally parallel to the water surface to be able to reciprocate vertically to propel the vessel as the vessel oscillates; characterised in that

    the attachment of the elongated inflexible linking member to the vessel is a hinged attachment enabling unfastening of the fin propulsion system to raise it to a storage position on the vessel.

2. A propulsion system as claimed in claim 1 in which the generally inflexible fin can deform to a small degree from the longitudinal plane of the fin.

3. A propulsion system as defined in claim 1 wherein said resilient connecting means comprises a spring-loaded joint (40) joining said inflexible projection member to said fin member.

4. A propulsion system as defined in claim 1 wherein said resilient connecting means comprises a resilient telescopic projection member.

5. A propulsion system as defined in claim 1 wherein said inflexible projection member is elongated and connected so as to be coplanar with said vessel.

6. A propulsion system as defined in claim 1 wherein said inflexible projection member comprises a telescopic projection member.

## Revendications

1. Système de propulsion d'embarcation sur l'eau comportant

    un élément de raccord inflexible allongé (10) d'attache à l'embarcation s'allongeant derrière l'embarcation.

    un élément flexible de raccord (12,40) d'attache à l'extrémité distale de l'élément allongé inflexible d'attache; et

    une ailette généralement inflexible (13) d'attache à l'extrémité distale des moyens flexibles de raccord, ladite ailette inflexible ayant un corps plat allongé vers l'extérieur depuis l'extrémité distale des moyens flexibles d'attache situés généralement parallèle à la surface de l'eau admettant le mouvement alternatif vertical pour la propulsion de l'embarcation alors qu'elle oscille; **caractérisé en ce que**

    l'attache de l'élément inflexible allongé de raccord à l'embarcation est une attache à charnière permettant de détacher le système de propulsion à ailette pour le relever en position de rangement sur l'embarcation.

2. Système de propulsion suivant la revendication 1 dont l'ailette nervure généralement inflexible admet une légère déformation par rapport au plan longitudinal de la nervure.

3. Système de propulsion suivant la revendication 1 dont lesdits moyens souples de raccord prévoient un joint à ressort (40) raccordant ledit élément inflexible de projection audit élément d'ailette.

4. Système de propulsion suivant la revendication 1 dont lesdits moyens souples de raccord comportent un élément téléscopique inflexible de projection.

5. Système de propulsion suivant la revendication 1 dont ledit élément inflexible de projection est allongé et raccordé de façon à être coplanaire avec ladite embarcation.

6. Système de propulsion suivant la revendication 1 dont ledit élément inflexible de projection comporte un élément téléscopique de projection.

## Patentansprüche

1. Antriebssystem für ein auf dem Wasser schwimmendes Schiff, umfassend
ein verlängertes unelastisches Verbindungsglied (10), das an dem Schiff befestigt wird, um sich hinter dem Schiff zu erstrecken;
ein federndes Verbindungsmittel (12,40), das an dem entfernten Ende des verlängerten unelastischen Verbindungsgliedes befestigt wird; und
eine im allgemeinen unelastische Flosse (13), die an dem entfernten Ende des federnden Verbindungsmittels angebracht wird, wobei die unelastische Flosse einen flachen Körper, der sich nach aussen von dem entfernten Ende des federnden Verbindungsmittels erstreckt, hat, um im allgemeinen parallel zur Wasseroberfläche zu liegen, um fähig zu sein, sich senkrecht hin- und herzubewegen, um das Schiff anzutreiben, während das Schiff schwingt; dadurch gekennzeichnet, dass
die Befestigung des verlängerten unelastischen Verbindungsgliedes an das Schiff eine schwenkbare Befestigung ist, die das Lösen des Flossenantriebssystems befähigt, um es in eine Lagerungsstellung auf dem Schiff zu heben.

2. Antriebssystem nach Anspruch 1, in dem die im allgemeinen unelastische Flosse sich ein wenig aus der longitudinalen Ebene der Flosse verformen kann.

3. Antriebssystem nach Anspruch 1, worin das federnde Verbindungsmittel ein federbelastetes Gelenk (40) umfasst, das das unelastische Vorsprungsglied Glied mit dem Flossenglied verbindet.

4. Antriebssystem nach Anspruch 1, worin das federnde Verbindungsmittel ein federndes teleskopisches Vorsprungsglied umfasst.

5. Antriebssystem nach Anspruch 1, worin das unelastische Vorsprungsglied verlängert und derart verbunden ist, um mit dem Schiff koplanar zu sein.

6. Antriebssystem nach Anspruch 1, worin das unelastische Vorsprungsglied ein teleskopisches Vor- sprungsglied umfasst.

*Fig.1.*

*Fig.2.*

*Fig.3.*

*Fig.4.*

7

_Fig. 5_

_Fig. 9_

_Fig. 6_

_Fig. 8_

_Fig. 7_